# EUROPEAN PATENT SPECIFICATION

(11) **EP 4 470 897 B1**
(45) Date of publication and mention of the grant of the patent: **26.08.2026**
(21) Application number: 24174478.8
(22) Date of filing: 07.05.2024
(51) Int. Cl.: B62K 25/28

(54) **SADDLE-TYPE VEHICLE AND COUPLING BRACKET USED THEREIN**
SATTELFAHRZEUG UND DARIN VERWENDETE KUPPLUNGSKLAMMER
VÉHICULE DE TYPE À SELLE ET SUPPORT D'ACCOUPLEMENT UTILISÉ DANS CELUI-CI

(30) Priority: 15.05.2023 JP 2023080107; 16.02.2024 JP 2024022387
(43) Date of publication of application: 04.12.2024
(73) Proprietor: Kawasaki Motors, Ltd., Akashi-shi, Hyogo 673-8666 (JP)
(72) Inventor: NARUMI, Tadashi, Hyogo, 673-8666 (JP); ISHII, Hiroshi, Hyogo, 673-8666 (JP); NAGAO, Koki, Hyogo, 673-8666 (JP); NAKAJIMA, Takeshi, Hyogo, 673-8666 (JP)
(74) Representative: Müller-Boré & Partner Patentanwälte PartG mbB

(56) References cited:
- JP-A- 2016 203 954
- US-A- 4 616 729
- US-A- 5 531 289
- US-B2- 8 550 202

## Description

### FIELD OF INVENTION

The present disclosure relates to a saddle-type vehicle.

### BACKGROUND ART

JP 2016-203954 A discloses a saddle-type vehicle. This saddle-type vehicle includes an electric motor as a drive source and a chain that transmits a driving force of the electric motor to a rear wheel.

In the saddle-type vehicle as described above, chain tension acts on a driving side sprocket as the power of the drive source (electric motor) is transmitted to the rear wheel via the chain. At this time, bending stress in a front-rear direction occurs in a portion (sprocket support portion) that supports the sprocket in the drive source. Therefore, the drive source needs improvement in the rigidity of the sprocket support portion, and the degree of freedom in design is low.

Document US 8 550 202 B2 describes a rear portion structure of a saddle-type vehicle, which enables securement of a space for arranging vehicle-mounted components on the upper side of a drive chain at a position apart from a pivot shaft. A motorcycle includes a rear wheel swingably provided on a main member via a swing arm, a drive chain entrained about a driven sprocket provided on the rear wheel and a drive sprocket, and a seat frame. An air-exhaust pipe extends from an engine on a lower portion of the seat frame, an extending portion extends rearward of the vehicle from the seat frame, and a chain guide roller is mounted on the extending portion.

### SUMMARY OF THE INVENTION

The present disclosure has been made in view of the above circumstances, and an object thereof is to provide a saddle-type vehicle that can improve the degree of freedom in design of the drive source.

In order to solve the above problem, a saddle-type vehicle according to one aspect of the present disclosure includes: a swing arm rotatably supporting a rear wheel; a vehicle body frame swingably supporting the swing arm via a pivot shaft; an electric motor; a driving side rotating body disposed at a position away from the electric motor and the pivot shaft and rotationally driven by the electric motor; a driven side rotating body fixed to the rear wheel; an endless power transmission member bridged between the driving side rotating body and the driven side rotating body; and a coupling bracket integrally including a first support portion pivotally supporting the driving side rotating body, a second support portion supported by the pivot shaft, and a coupling portion coupling the first support portion and the second support portion.

The invention is defined by the independent claim and preferred embodiments are defined by dependent claims.

### BRIEF DESCRIPTION OF THE DRAWINGS

Fig. 1 is a left side view of an electric two-wheel vehicle (saddle-type vehicle) according to a first embodiment of the present disclosure;
Fig. 2 is an enlarged side cross-sectional view showing a center lower portion of the electric two-wheel vehicle;
Fig. 3 is a top view showing a drive system of the electric two-wheel vehicle;
Fig. 4 is an exploded perspective view of an electric motor and peripheral components thereof;
Fig. 5 is an exploded perspective view showing a structure for attaching the electric motor to a vehicle body frame;
Fig. 6 is an enlarged side view of the electric motor and a vicinity portion thereof as viewed from the left side;
Fig. 7 is a side view in which a support plate and the like are removed from the component group of Fig. 6;
Fig. 8 is a cross-sectional view of a coupling bracket;
Fig. 9 is a schematic side view for explaining actions and effects of the first embodiment;
Fig. 10 is a side view showing an electric two-wheel vehicle (saddle-type vehicle) according to a second embodiment of the present disclosure; and
Fig. 11 is a side view showing a modification of the second embodiment.

### DETAILED DESCRIPTION

### (1) First embodiment

### [Vehicle body structure of electric two-wheel vehicle]

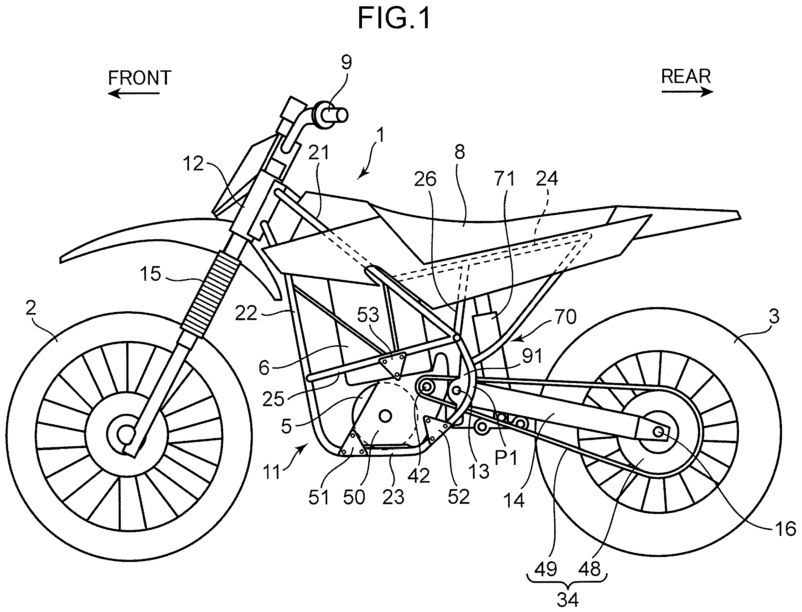

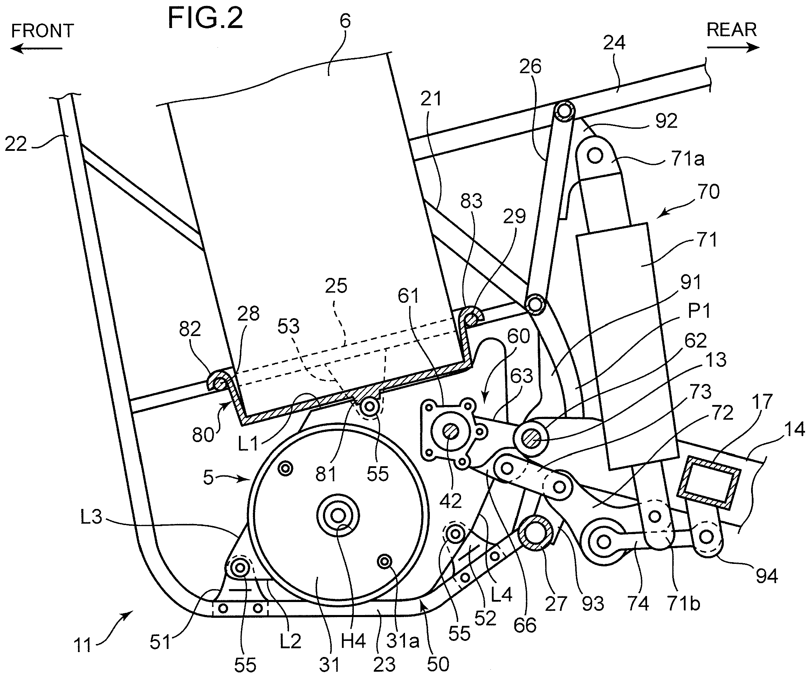

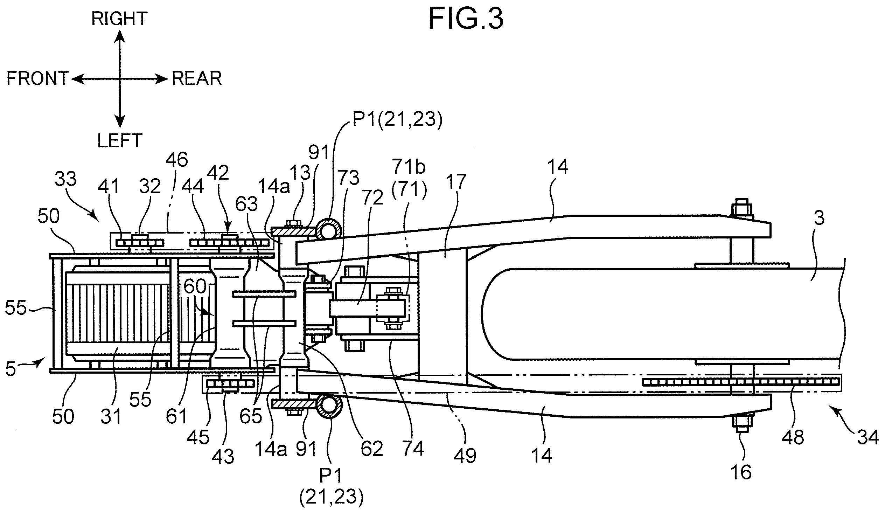

Hereinafter, the first embodiment of a saddle-type vehicle of the present disclosure will be described with reference to the drawings. Fig. 1 is a left side view of an electric two-wheel vehicle as an example of the saddle-type vehicle, Fig. 2 is an enlarged side cross-sectional view showing a center lower portion of the electric two-wheel vehicle, and Fig. 3 is a top view showing a drive system of the electric two-wheel vehicle. As shown in the present figure, the electric two-wheel vehicle includes a vehicle body 1, a front wheel 2 and a rear wheel 3, an electric motor 5, a battery 6, a seat 8, and a handlebar 9. The front wheel 2 and the rear wheel 3 are a pair of front and rear wheels movably supporting the vehicle body 1. The electric motor 5 is a drive source that generates a driving force for rotating the rear wheel 3, in other words, a driving force for traveling the electric two-wheel vehicle, and is configured by, for example, a three-phase AC synchronous electric motor. The battery 6 is a charger that stores electric power supplied to the electric motor 5. The seat 8 is a seat on which an occupant (rider) who drives the electric two-wheel vehicle is seated. The handlebar 9 is a steering handlebar that the occupant grips when steering the front wheel 2.

The vehicle body 1 includes a vehicle body frame 11 and a pivot shaft 13. The vehicle body frame 11 is a frame structure forming a skeleton of the vehicle body 1, and supports the front and rear wheels 2 and 3, the electric motor 5, the battery 6, the seat 8, and the handlebar 9 described above. The pivot shaft 13 is a shaft attached to a rear portion of the vehicle body frame 11 and extending in a vehicle width direction.

The vehicle body frame 11 has a head portion 12 at a front end portion thereof. The head portion 12 is a tubular member that rotatably holds a steering shaft extending in an up-down direction about the shaft center thereof. An upper end portion of the steering shaft is attached with the handlebar 9, and a lower end portion of the steering shaft is connected with a front fork 15. That is, the head portion 12 rotatably holds a steering shaft coupling the handlebar 9 and the front fork 15. The front wheel 2 is pivotally supported at a lower end portion of the front fork 15.

The pivot shaft 13 functions as a swing fulcrum of the swing arm 14. The pivot shaft 13 is supported by the vehicle body frame 11 between the front wheel 2 and the rear wheel 3 and below the seat 8.

The swing arm 14 is an arm rotatably supporting the rear wheel 3, and extends in the front-rear direction so as to couple the pivot shaft 13 and an axle 16 of the rear wheel 3. That is, the front end portion of the swing arm 14 is pivotally supported by the pivot shaft 13, and the rear wheel 3 is pivotally supported by the rear end portion of the swing arm 14.

The swing arm 14 is provided not only on the left side of the vehicle body 1 shown in Fig. 1 but also on the right side of the vehicle body 1 (see Fig. 3). That is, the electric two-wheel vehicle of the present embodiment includes the pair of swing arms 14 coupling the both left and right end portions of the pivot shaft 13 and the both left and right end portions of the axle of the rear wheel 3. The pair of swing arms 14 are coupled to each other via a cross member 17 extending in the vehicle width direction.

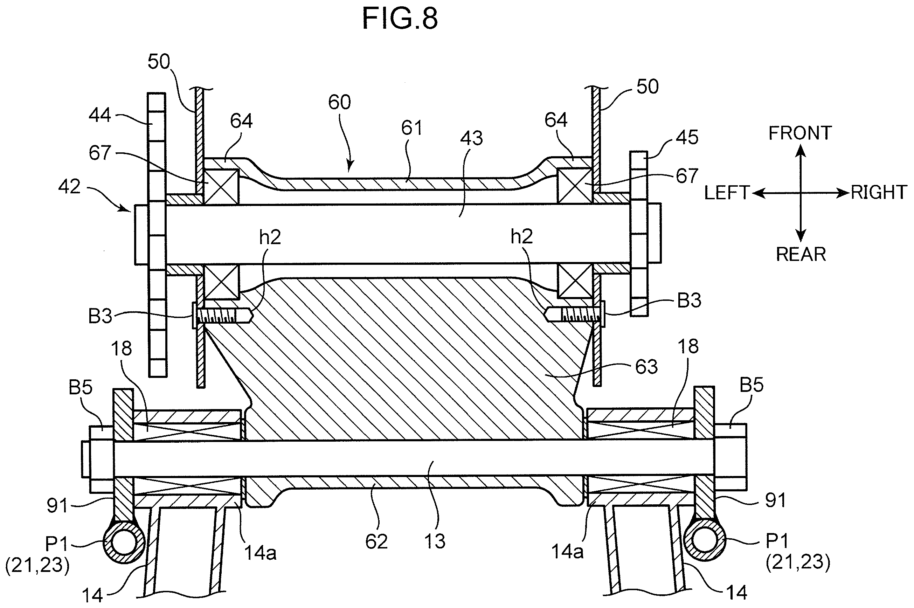

Each of the pair of swing arms 14 has, at the front end portion thereof, a boss portion 14a to be externally inserted to the pivot shaft 13 (see Fig. 3 and Fig. 8 described later). Inside of the boss portion 14a is attached with a pivot bearing 18 (Fig. 8) for allowing relative rotation of the boss portion 14a with respect to the pivot shaft 13.

As shown in Figs. 1 and 2, the vehicle body frame 11 includes a main pipe 21, a front pipe 22, a lower pipe 23, a rear pipe 24, a first coupling pipe 25, and a second coupling pipe 26. The main pipe 21 is a pipe material extending from the upper portion of the head portion 12 while inclining rearward and downward. The front pipe 22 is a pipe material extending substantially downward from the lower portion of the head portion 12, and is disposed at the front of and below the main pipe 21. The lower pipe 23 is a bent pipe material coupling a rear end (lower end) of the main pipe 21 and a lower end of the front pipe 22, and has a portion extending substantially straight backward from the lower end of the front pipe 22 and a portion extending from the rear end of the portion while being inclined (curved) upward and backward. The rear pipe 24 is a pipe material extending from an intermediate portion of the main pipe 21 while inclining rearward and upward. The first coupling pipe 25 is a pipe material extending in the front-rear direction coupling an intermediate portion of the front pipe 22 and a rear portion of the main pipe 21. The second coupling pipe 26 is a pipe material extending in the up-down direction coupling the rear portion of the main pipe 21 and an intermediate portion of the rear pipe 24.

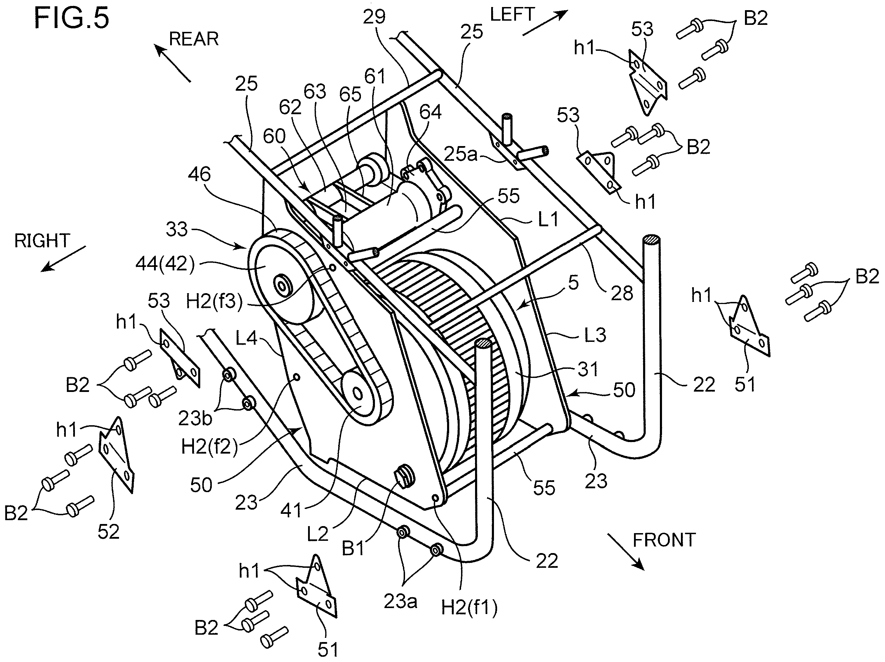

The vehicle body frame 11 has a bilaterally symmetrical structure. That is, the above-described pipes 21 to 26 of the vehicle body frame 11 are provided not only on the left side of the vehicle body 1 shown in Fig. 1 but also on the right side of the vehicle body 1 (see Fig. 2 and Fig. 5 described later). In other words, the vehicle body frame 11 includes a pair of the main pipes 21 and a pair of the front pipes 22 extending from the head portion 12 while branching left and right, a pair of the rear pipes 24 branching rearward from an intermediate portion of the left and right main pipes 21, a pair of the lower pipes 23 and a pair of the first coupling pipes 25 coupling the left and right main pipes 21 and the left and right front pipes 22, respectively, and a pair of the second coupling pipes 26 coupling the left and right main pipes 21 and the left and right rear pipes 24, respectively.

A portion where the main pipe 21 and the lower pipe 23 are joined is a curved portion P1 curved in an arch shape. That is, the rear portion of the main pipe 21 extends toward the lower pipe 23 while being curved downward, and a rear portion of the lower pipe 23 extends toward the main pipe 21 while being curved upward. The curved rear end portions of the main pipe 21 and the lower pipe 23 are joined to each other, whereby the curved portion P1 having an arch shape curved convexly to the rear side. A pivot stay 91 having a plate shape that holds the pivot shaft 13 is fixed to the curved portion P1. The curved portion P1 and the pivot stay 91 are provided respectively at a joint portion between the main pipe 21 on the left side and the lower pipe 23 on the left side and at a joint portion between the main pipe 21 on the right side and the lower pipe 23 on the right side. In other words, the vehicle body frame 11 includes a pair of left and right curved portions P1 and a pair of left and right pivot stays 91 fixed to the respective curved portions P1. The pair of pivot stays 91 are fixed to the front side of the respective curved portions P1 by welding or the like, and holds the both left and right end portions of the pivot shaft 13. Specifically, the pivot shaft 13 is fixed between the pair of pivot stays 91 by being fastened in the vehicle width direction using a fastening member B5 shown in Fig. 8 described later.

The vehicle body frame 11 supports the electric motor 5 via a support plate 50 described later. The vehicle body frame 11 supports the battery 6 at a position above the electric motor 5. The electric motor 5 and the battery 6 are disposed between the front wheel 2 and the rear wheel 3 and below the seat 8.

As shown in Fig. 2, the vehicle body frame 11 further includes a lower cross pipe 27, a first crossbar 28, and a second crossbar 29 extending in the vehicle width direction. The lower cross pipe 27 is a pipe material coupling the rear portions of the left and right lower pipes 23 in the vehicle width direction. As also shown in Fig. 5 described later, the first crossbar 28 is a bar material coupling the front portions of the left and right first coupling pipes 25 in the vehicle width direction. The second crossbar 29 is a bar material coupling the rear portions of the left and right first coupling pipes 25 in the vehicle width direction.

### [Drive system]

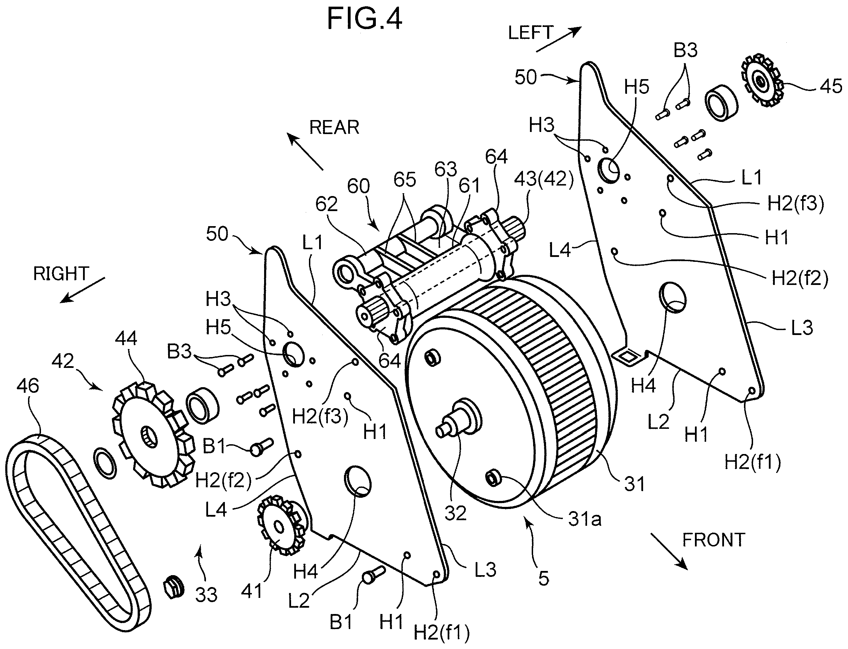

Fig. 4 is an exploded perspective view of the electric motor 5 and peripheral components thereof, and Fig. 5 is an exploded perspective view showing the structure for attaching the electric motor 5 to the vehicle body frame 11. As shown in the present figure, the electric motor 5 includes a motor housing 31 and a motor output shaft 32 rotatably supported by the motor housing 31.

The motor housing 31 is a case body that internally accommodates electric components such as a rotor and a stator. The motor housing 31 is provided separately from a coupling bracket 60 described later, and is disposed at an interval from the coupling bracket 60.

The motor output shaft 32 is an output shaft rotationally driven by receiving electric power supplied from the battery 6, and is disposed to extend in the vehicle width direction. The motor output shaft 32 is provided so as to protrude from a side surface on one side in the vehicle width direction of the motor housing 31. In the present embodiment, the motor output shaft 32 is provided so as to protrude from the right side surface of the motor housing 31. The motor output shaft 32 is positioned at the front of and below the pivot shaft 13.

The output of the electric motor 5, that is, rotation of the motor output shaft 32 is transmitted to the rear wheel 3 via a primary transmission mechanism 33 and a secondary transmission mechanism 34 (Fig. 3). Both the transmission mechanisms 33 and 34 transmit the rotation of the motor output shaft 32 to the rear wheel 3 while decelerating the rotation at a predetermined reduction ratio. The primary transmission mechanism 33 corresponds to the "transmission mechanism" in the present disclosure.

The primary transmission mechanism 33 includes a motor sprocket 41 fixed to the motor output shaft 32 and rotating integrally with the shaft 32, a relay shaft 42 disposed at a position separated rearward from the motor sprocket 41, and an endless primary chain 46 bridged between the motor sprocket 41 and the relay shaft 42. As also shown in Fig. 8 described later, the relay shaft 42 includes a shaft portion 43 extending in the vehicle width direction, a first sprocket 44 fixed to one end of the shaft portion 43, and a second sprocket 45 fixed to the other end of the shaft portion 43. An outer diameter of the first sprocket 44 is larger than an outer diameter of the motor sprocket 41. The primary chain 46 is bridged between the motor sprocket 41 and the first sprocket 44 of the relay shaft 42, and performs power transmission so that the both sprockets 41 and 44 rotate in an interlocking manner. The relay shaft 42 corresponds to the "driving side rotating body" or the "rotating body" in the present disclosure, and the primary chain 46 corresponds to the "upstream side transmission member" or the "transmission member" in the present disclosure.

The secondary transmission mechanism 34 includes the above-described relay shaft 42 shared with the primary transmission mechanism 33, a driven sprocket 48 fixed to the rear wheel 3, and an endless secondary chain 49 bridged between the relay shaft 42 and the driven sprocket 48. An outer diameter of the driven sprocket 48 is larger than an outer diameter of the second sprocket 45. The secondary chain 49 is bridged between the second sprocket 45 of the relay shaft 42 and the driven sprocket 48, and performs power transmission so that the both the sprockets 45 and 48 rotate in an interlocking manner. The driven sprocket 48 corresponds to the "driven side rotating body" in the present disclosure, and the secondary chain 49 corresponds to the "power transmission member" in the present disclosure.

The relay shaft 42 is positioned at the rear of and above the motor output shaft 32. The relay shaft 42 is positioned at the front of the pivot shaft 13. In other words, the relay shaft 42 is disposed between the motor output shaft 32 and the pivot shaft 13 so as to extend in the vehicle width direction in parallel with the both.

The primary transmission mechanism 33 and the secondary transmission mechanism 34 are disposed on the opposite side in the vehicle width direction across the electric motor 5. That is, the motor sprocket 41, the first sprocket 44, and the primary chain 46, which are components of the primary transmission mechanism 33, are disposed on one side in the vehicle width direction of the electric motor 5, and the second sprocket 45, the driven sprocket 48, and the secondary chain 49, which are components of the secondary transmission mechanism 34, are disposed on the other side in the vehicle width direction of the electric motor 5. In the present embodiment, the primary transmission mechanism 33 is disposed on the right side of the vehicle body 1, and the secondary transmission mechanism 34 is disposed on the left side of the vehicle body 1.

### [Attachment structure of electric motor]

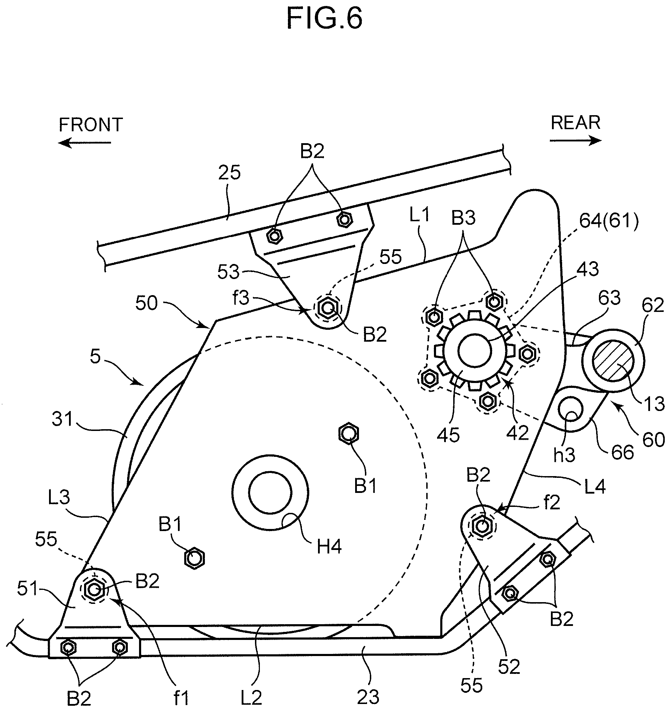

Fig. 6 is an enlarged side view of the electric motor 5 and a vicinity portion thereof as viewed from the left side. As shown in Figs. 1 to 6, the electric motor 5 is attached to the vehicle body frame 11 via a pair of the left and right support plates 50. The pair of support plates 50 are plate shaped members having a predetermined thickness in the vehicle width direction, and are joined to both left and right side portions of the electric motor 5 (motor housing 31), respectively. Each of the support plates 50 joined to the electric motor 5 is joined to each portion of the vehicle body frame 11 around the electric motor 5. That is, the electric motor 5 is supported between the pair of support plates 50, and is attached to the vehicle body frame 11 via the support plates 50.

The motor housing 31 of the electric motor 5 has a plurality of fastening seats 31a corresponding to a plurality of motor fixing bolts B1 on the both left and right side surfaces thereof (see Fig. 4 and the like). The motor fixing bolt B1 is a fastening member for joining the support plate 50 to the motor housing 31, and a screw hole corresponding to this motor fixing bolt B1 is formed in the fastening seat 31a. The pair of support plates 50 are provided with a plurality of bolt holes H1 through which the shaft portions of the motor fixing bolts B1 are inserted. The motor fixing bolts B1 inserted into the bolt holes H1 of the pair of support plates 50 are screwed into the fastening seats 31a on the both side surfaces of the motor housing 31, whereby the support plates 50 are detachably joined to both side surfaces of the motor housing 31, respectively.

Each of the support plates 50 is formed in a substantially quadrangular shape (rhombus). Each of the support plates 50 is formed to have a size that fits in a region surrounded by the main pipe 21, the front pipe 22, the lower pipe 23, and the first coupling pipe 25 in side view. That is, as shown mainly in Figs. 5 and 6, the support plate 50 attached to the vehicle body frame 11 includes an upper side L1 extending substantially parallel to the first coupling pipe 25 in the vicinity of the lower side of the first coupling pipe 25, a lower side L2 extending substantially parallel to the lower pipe 23 in the vicinity of the upper side of a front portion of the lower pipe 23, a rear side L4 extending substantially parallel to each of the lower pipe 23 and the main pipe 21 in the vicinity of the front side of the respective rear portions (portions extending in the up-down direction while being curved in an arch shape) of the lower pipe 23 and the main pipe 21, and a front side L3 extending substantially parallel to the rear side L4 at the rear of the front pipe 22.

The pair of support plates 50 are disposed so as to cover the both left and right side surfaces of the electric motor 5 from the outside in a state of being attached to the vehicle body frame 11. In the present embodiment, each of the support plates 50 has a shape that covers most of the side surface of the electric motor 5 (see Fig. 6). That is, each of the support plates 50 has a shape extending from the front end portion to the rear end of the electric motor 5 and extending from the upper end portion to the lower end portion of the electric motor 5. However, the support plate 50 may have any shape as long as it covers at least a part of the side surface of the electric motor 5, and may cover the entire side surface of the electric motor 5 or may cover a region smaller than that in Fig. 6 of the side surface.

As shown in Fig. 4, a first insertion hole H4 through which the motor output shaft 32 of the electric motor 5 is inserted is formed in the vicinity of the center portion of the support plate 50 on the right side. The motor sprocket 41 is fitted to a tip end portion of the motor output shaft 32 protruding through the first insertion hole H4 to the outside (right side) of the support plate 50 on the right side. In the present embodiment, the first insertion hole H4 is formed also in the support plate 50 on the left side for commonality of components, but this first insertion hole H4 on the left side may be omitted.

A second insertion hole H5 through which the shaft portion 43 of the relay shaft 42 is inserted is formed in a rear upper portion of the pair of support plates 50. The first sprocket 44 is fitted to one end portion of the shaft portion 43 protruding through the second insertion hole H5 to the outside (right side) of the support plate 50 on the right side. The second sprocket 45 is fitted to the other end portion of the shaft portion 43 protruding through the second insertion hole H5 to the outside (left side) of the support plate 50 on the left side.

As described above, in the present embodiment, the motor sprocket 41 and the first sprocket 44 are disposed outside the support plate 50 on the right side, and the second sprocket 45 is disposed outside the support plate 50 on the left side. In other words, in the present embodiment, the sprockets (41 and 44) for the primary transmission mechanism 33 and the sprocket (45) for the secondary transmission mechanism 34 are disposed on the opposite side in the vehicle width direction across the electric motor 5 and the pair of support plates 50. Although not shown, in order to protect the sprockets disposed outside the support plate 50, a separate design cover is attached to the further outside of each of the support plates 50. The design cover may be attached to the support plate 50 or may be attached to the vehicle body frame 11.

As shown in Figs. 1, 2, 5, and 6, each of the pair of support plates 50 is detachably attached to the vehicle body frame 11 via a plurality of stays (51 to 53). In the present embodiment, three stays including a first stay 51, a second stay 52, and a third stay 53 are used. The first stay 51 is a metal fitting for joining a front end portion of the support plate 50, that is, the vicinity of the intersection between the front side L3 and the lower side L2 of the support plate 50, to the front portion of the lower pipe 23. The second stay 52 is a metal fitting for joining a rear portion of the support plate 50, that is, the vicinity of an intermediate portion of the rear side L4 of the support plate 50, to the rear portion of the lower pipe 23. The third stay 53 is a metal fitting for joining an upper portion of the support plate 50, that is, the vicinity of an intermediate portion of the upper side L1 of the support plate 50, to the first coupling pipe 25.

Each of the first to third stays 51 to 53 has a substantially triangular shape in side view. As shown in Fig. 5, the bolt hole h1 for a plate fixing bolt B2, which is a fastening member for fixing the support plate 50, is formed at a position corresponding to each vertex of the triangle in each of the stays 51 to 53. A screw hole H2 into which the plate fixing bolt B2 is screwed is formed at each of the three locations of the support plate 50 corresponding to each of the vertices of the first to third stays 51 to 53, that is, at the front end portion, the rear portion, and the upper portion of the support plate 50.

The front portion of the lower pipe 23 is provided with two fastening seats 23a corresponding to the two bolt holes h1 of the first stay 51, and the rear portion of the lower pipe 23 is provided with two fastening seats 23b corresponding to the two bolt holes h1 of the second stay 52. Each of the fastening seats 23a and 23b is provided with a screw hole into which the plate fixing bolt B2 is screwed. An intermediate portion of the first coupling pipe 25 is provided with a fastening seat 25a having a plate shape having two screw holes corresponding to the two bolt holes h1 of the third stay 53.

The plate fixing bolts B2 inserted through the three bolt holes h1 of the first stay 51 are respectively screwed into the screw hole H2 of the front end portion of the support plate 50 and the fastening seats 23a of the front portion of the lower pipe 23. The plate fixing bolts B2 inserted through the three bolt holes h1 of the second stay 52 are respectively screwed into the screw hole H2 of the rear portion of the support plate 50 and the fastening seats 23b of the rear portion of the lower pipe 23. The plate fixing bolts B2 inserted through the three bolt holes h1 of the third stay 53 are respectively screwed into the screw hole H2 of the upper portion of the support plate 50 and the fastening seats 25a of the first coupling pipe 25. As described above, the front end portion of the support plate 50 and the front portion of the lower pipe 23 are joined via the first stay 51, the rear portion of the support plate 50 and the rear portion of the lower pipe 23 are joined via the second stay 52, and the upper portion of the support plate 50 and the first coupling pipe 25 are joined via the third stay 53.

As described above, in the present embodiment, the pair of support plates 50 are detachably joined to the both left and right side portions of the electric motor 5 using the motor fixing bolt B1. Each of the support plates 50 is detachably joined to each portion of the vehicle body frame 11 using the stays 51 to 53 and the plate fixing bolts B2. In other words, the electric motor 5 is detachably attached to the vehicle body frame 11 via the support plate 50 detachable with respect to both the vehicle body frame 11 and the electric motor 5.

As described above, each of the support plates 50 has, at the front end portion, the rear portion, and the upper portion thereof, the screw holes H2 into which the plate fixing bolts B2 for joining the support plate 50 to the vehicle body frame 11 are screwed. Here, as shown in Figs. 4 to 6, the fastening destination of the bolt B2 corresponding to the screw hole H2 at the front end portion is a first fastening portion f1, the fastening destination of the bolt B2 corresponding to the screw hole H2 at the rear portion is a second fastening portion f2, and the fastening destination of the bolt B2 corresponding to the screw hole H2 at the upper portion is a third fastening portion f3. The first fastening portion f1 and the second fastening portion f2 are separated from each other in the front-rear direction, and the both fastening portions f1 and f2 and the third fastening portion f3 are separated from each other in the up-down direction. In other words, each of the support plates 50 includes, as fastening portions to be fastened to the vehicle body frame 11, the first fastening portion f1 and the second fastening portion f2 separated from each other in the front-rear direction, and the third fastening portion f3 separated from the fastening portions f1 and f2 in the up-down direction. The first fastening portion f1, the second fastening portion f2, and the third fastening portion f3 correspond to the "first joint portion", the "second joint portion", and the "third joint portion" in the present disclosure, respectively.

As shown in Figs. 2, 3, and 5, a plurality of (three) collars 55 are disposed between the pair of left and right support plates 50. The collar 55 is an elongated cylindrical component extending in the vehicle width direction, and has an axial length corresponding to a separation distance in the vehicle width direction of the pair of support plates 50. In the present embodiment, the three collars 55 are prepared corresponding to the first to third fastening portions f1 to f3 described above. That is, the collars 55 are disposed at three respective locations, that is, between the first fastening portions f1 of the pair of support plates 50, between the second fastening portions f2 of the pair of support plates 50, and between the third fastening portions f3 of the pair of support plates 50. The collar 55 is held at a position corresponding to each of the fastening portions f1 to f3 in a state in which the tip end portion of the plate fixing bolt B2 is inserted into both ends of the collar and sandwiched between the pair of support plates 50.

### [Coupling bracket]

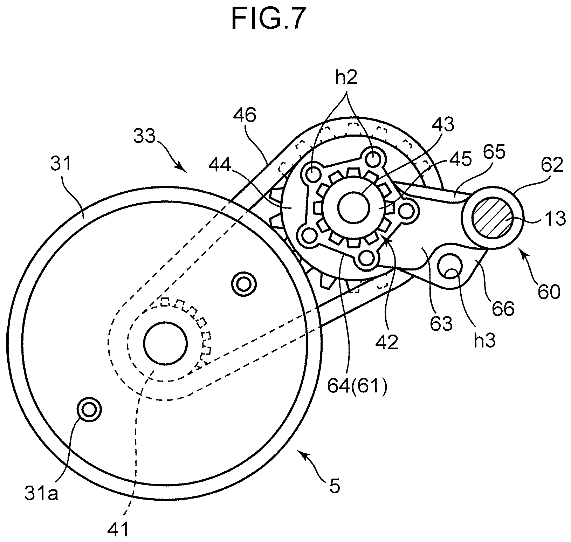

Fig. 7 is a side view in which the support plate 50 and the like are removed from the component group of Fig. 6. As shown in Figs. 2 to 7, the coupling bracket 60 separate from the electric motor 5 (motor housing 31) is disposed at the rear of the electric motor 5. The coupling bracket 60 is a bracket coupling the relay shaft 42 and the pivot shaft 13, and has a shape extending in the front-rear direction across between the relay shaft 42 and the pivot shaft 13 and extending in the vehicle width direction along the pivot shaft 13.

Fig. 8 is a cross-sectional view of the coupling bracket 60. As shown in Figs. 2 and 4 to 8, the coupling bracket 60 integrally includes a first boss 61 pivotally supporting the relay shaft 42, a second boss 62 supported by the pivot shaft 13, and a coupling portion 63 coupling the first boss 61 and the second boss 62. The coupling bracket 60 can be formed of, for example, a molded product such as a cast integrally including these elements 61 to 63. Of course, the coupling bracket 60 can be formed of a component other than a molded product such as a sheet metal welded product as long as the integrity of the coupling bracket 60 can be achieved. The first boss 61 corresponds to the "first support portion" in the present disclosure, and the second boss 62 corresponds to the "second support portion" in the present disclosure.

The first boss 61 is a tubular body extending in the vehicle width direction, and rotatably holds the shaft portion 43 of the relay shaft 42. Flanges 64 for joining the first boss 61 to the support plate 50 are formed at both ends of the first boss 61. A plurality of screw holes h2 (Fig. 7) are formed in each of the flanges 64, and a plurality of bolt holes H3 (Fig. 4) corresponding to the screw holes h2 are formed in each of the pair of support plates 50. In the present embodiment, the flange 64 is formed in a substantially pentagonal shape in side view, and the screw holes h2 are formed at positions corresponding to respective vertices of this pentagon. That is, the five screw holes h2 are formed in each of the flanges 64 at both ends of the first boss 61, and the five bolt holes H3 corresponding to these are formed in each of the pair of support plates 50. A shaft portion of a bolt B3 (Fig. 4) inserted into the bolt hole H3 of the support plate 50 is screwed into each of the screw holes h2. The coupling bracket 60 is detachably joined to the pair of support plates 50 through fastening of the flanges 64 at both ends by such a bolt B3. The flange 64 detachable with respect to the support plate 50 corresponds to the "attachment portion" in the present disclosure.

A bearing 67 (Fig. 8) is disposed inside each of the flanges 64 at both ends of the first boss 61. The bearing 67 is a bearing that allows rotation of the relay shaft 42 with respect to the first boss 61, and is disposed between an outer periphery of both ends of the shaft portion 43 of the relay shaft 42 and an inner peripheral surface of each of the flanges 64.

The second boss 62 is formed of a tubular body extending in parallel with the first boss 61 (in the vehicle width direction) at the rear relative to the first boss 61. The second boss 62 is disposed so as to extend in the vehicle width direction across between front end bearing portions (boss portions 14a) of the pair of swing arms 14. The second boss 62 is rotatably supported about the pivot shaft 13 by internally inserting the pivot shaft 13. A slight gap can exist in the radial direction between the second boss 62 and the pivot shaft 13. That is, the second boss 62 is rotatable about the shaft center of the pivot shaft 13 in a state where the joint between the first boss 61 (flange 64) and the support plate 50 described above is released. In other words, the coupling bracket 60 is supported in a state of being tiltable (angularly displaced) about the pivot shaft 13 in side view. Conversely, in a state where the first boss 61 is joined to the support plate 50, tilting of the pivot shaft 13 is prohibited.

The coupling portion 63 is a substantially plate-like body whose thickness direction is the up-down direction, and couples the first boss 61 and the second boss 62 in the front-rear direction. The up-down direction dimension, that is, the thickness of the coupling portion 63 is smaller than the thickness (outer diameter) of the first boss 61 and the second boss.

An upper surface of the coupling portion 63 is provided with a plurality of ribs 65. Each of the ribs 65 protrudes upward from the upper surface of the coupling portion 63, and is formed so as to extend in the front-rear direction across between the first boss 61 and the second boss 62. In the present embodiment, the upper surface of the coupling portion 63 is provided with two ribs 65, and both the ribs 65 are arranged at intervals in the vehicle width direction.

As shown in Figs. 2, 6, and 7, a rear portion of the coupling portion 63 is provided with an arm attachment portion 66 protruding downward. The arm attachment portion 66 is provided with a support hole h3 for pivotally supporting a first coupling plate 73 described later.

### [Rear suspension]

As shown in Figs. 1 and 2, a rear suspension 70 is disposed between a rear upper portion of the vehicle body frame 11 and the swing arm 14. As shown in Fig. 2, the rear suspension 70 includes a shock absorber 71, a link arm 72, the first coupling plate 73, and a second coupling plate 74.

The shock absorber 71 is a tubular component for absorbing an impact caused by unevenness of a road surface, and is disposed so as to couple a rear upper portion of the vehicle body frame 11 and the swing arm 14 in the up-down direction. The shock absorber 71 has an upper attachment portion 71a at an upper end portion and a lower attachment portion 71b at a lower end portion. The upper attachment portion 71a is pivotally supported by a joint portion between the rear pipe 24 and the second coupling pipe 26 in the vehicle body frame 11. Specifically, a suspension stay 92 having a plate shape is fixed to the joint portion between the rear pipe 24 and the second coupling pipe 26, and the upper attachment portion 71a is pivotally supported by this suspension stay 92.

The link arm 72 is an arm having a shallow V shape in side view. A rear end portion of the link arm 72 is pivotally supported by the lower attachment portion 71b of the shock absorber 71. A front end portion of the link arm 72 is pivotally supported by an arm stay 93 fixed to the lower cross pipe 27. That is, the link arm 72 swingably couples the lower attachment portion 71b and the lower cross pipe 27.

The first coupling plate 73 is a plate extending in the front-rear direction. A rear end portion of the first coupling plate 73 is pivotally supported by the front end portion of the link arm 72. A front end portion of the first coupling plate 73 is pivotally supported by the arm attachment portion 66 of the coupling bracket 60. That is, the first coupling plate 73 swingably couples the link arm 72 and the coupling bracket 60. The first coupling plate 73 corresponds to the "coupling member" in the present disclosure.

The second coupling plate 74 is a plate extending in the front-rear direction. A front end portion of the second coupling plate 74 is pivotally supported by an intermediate portion in the front-rear direction of the link arm 72. A rear end portion of the second coupling plate 74 is pivotally supported by a fixed piece 94 fixed to the cross member 17 between the left and right swing arms 14. That is, the second coupling plate 74 swingably couples the link arm 72 and the swing arm 14.

### [Battery support structure]

As shown in Fig. 2, the battery 6 is supported by a battery tray 80. The battery tray 80 is a box shaped container having an open upper surface. The battery 6 is supported by the battery tray 80 in a state where the lower end portion thereof is housed inside the battery tray 80.

The battery tray 80 is supported above the electric motor 5. Specifically, the battery tray 80 includes a first engagement portion 81 engaged with the collar 55 above the electric motor 5, a second engagement portion 82 engaged with the first crossbar 28 of the vehicle body frame 11, and a third engagement portion 83 engaged with the second crossbar 29 of the vehicle body frame 11.

The first engagement portion 81 is formed at a center portion in the front-rear direction of a bottom surface of the battery tray 80. The collar 55 engaged with this first engagement portion 81 is a collar provided corresponding to the second fastening portion f2 (Fig. 6) on the upper portion of the support plate 50, is positioned above the electric motor 5, and extends in the vehicle width direction across between the pair of support plates 50.

The second engagement portion 82 is formed at an upper end portion of the front side of the battery tray 80. The first crossbar 28 engaged with this second engagement portion 82 is positioned at the front of and above the electric motor 5 and extends in the vehicle width direction in parallel with the collar 55 described above.

The third engagement portion 83 is formed at an upper end portion of the rear side of the battery tray 80. The second crossbar 29 engaged with this third engagement portion 83 is positioned at the rear of and above the electric motor 5 and extends in the vehicle width direction in parallel with the collar 55 described above.

The battery tray 80 is supported above the electric motor 5 by engaging the engagement portions 81, 82, and 83 with the collar 55, the first crossbar 28, and the second crossbar 29 described above, respectively.

### [Actions and effects]

As described above, in the present embodiment, the relay shaft 42 rotationally driven by the electric motor 5 and the driven sprocket 48 fixed to the rear wheel 3 are coupled in an interlocking manner via the secondary chain 49. The pivot shaft 13, which is a swing fulcrum of the swing arm 14 supporting the rear wheel 3, and the above-described relay shaft 42 are coupled by an integral coupling bracket 60. According to such a configuration, there is an advantage of being able to reduce the load applied to the electric motor 5 along with the power transmission to the rear wheel 3, and being able to improve the degree of freedom in design of the electric motor 5.

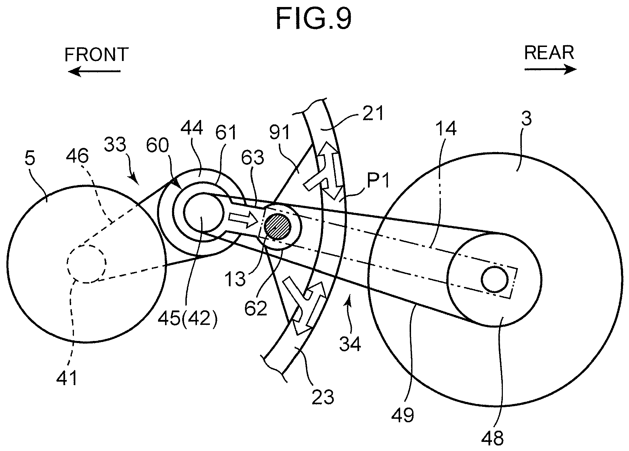

That is, in the present embodiment, since the relay shaft 42 and the pivot shaft 13 are coupled by the integral coupling bracket 60, the load input from the secondary chain 49 to the relay shaft 42 along with the power transmission to the rear wheel 3 is transmitted from the coupling bracket 60 to the vehicle body frame 11 via the pivot shaft 13 as indicated by the white arrow in Fig. 9. On the other hand, since the electric motor 5 is away from the relay shaft 42 and does not directly support the relay shaft 42, load transmission from the relay shaft 42 to the electric motor 5 hardly occurs. Therefore, for example, compared to a case where the relay shaft 42 is directly supported by the electric motor 5, that is, a case where the relay shaft supported by the electric motor 5 and the rear wheel 3 are coupled by the secondary chain 49, it is possible to suppress a load from the secondary chain 49 from being transmitted to the electric motor 5. Due to this, the necessary rigidity of the motor housing 31 of the electric motor 5 becomes low, and therefore the degree of freedom in design of the electric motor 5 can be improved, and the range of options of the electric motor 5 can be increased. For example, it is possible to increase the possibility of adopting not an electric motor exclusively designed for use in an electric two-wheel vehicle but an existing general-purpose electric motor. Furthermore, since the necessary rigidity of the motor housing 31 is low, it is possible to reduce the weight or size of the electric motor 5.

In the present embodiment, it is also possible to reduce the weight or size of the coupling bracket 60. Specifically, the coupling bracket 60 integrally includes the first boss 61 pivotally supporting the relay shaft 42, the second boss 62 supported by the pivot shaft 13, and the coupling portion 63 coupling the first boss 61 and the second boss 62. Therefore, the load input to the relay shaft 42 is transmitted from the first boss 61 to the second boss 62 via the coupling portion 63 as a compressive load in a shaft-to-shaft direction of the coupling bracket 60, that is, a direction (front-rear direction) connecting the shaft centers of the first boss 61 and the second boss 62. The load transmitted to the second boss 62 is transmitted to the vehicle body frame 11 via the pivot shaft 13. Thus, in the present embodiment, since the load input to the relay shaft 42 is linearly transmitted as a compressive load to the vehicle body frame 11 via the integral coupling bracket 60, bending load acting on the coupling bracket 60 can be reduced. Due to this, the necessary rigidity (bending rigidity) of the coupling bracket 60 becomes low, and therefore the coupling bracket 60 can be reduced in weight or size, and the vehicle weight that is the weight of the electric two-wheel vehicle can be reduced.

Here, in a case of a two-wheel vehicle that electrically travels using electric power stored in the battery 6 as in the electric two-wheel vehicle of the present embodiment, the magnitude of the vehicle weight greatly affects the cruising distance (travelable distance). Since the structure of the present embodiment using the coupling bracket 60 reduces the vehicle weight as described above, an effect of extending the cruising distance can also be expected. In particular, in a case of an electric two-wheel vehicle for motocross competition, it is important not only to reduce the weight but also to ensure the rigidity of the vehicle body. On the other hand, the configuration of the present embodiment in which the relay shaft 42 and the pivot shaft 13 are coupled by the integral coupling bracket 60 leads to both weight reduction and vehicle body rigidity, and thus the configuration of the present embodiment is suitable for an electric two-wheel vehicle for motocross competition.

In the present embodiment, the coupling bracket 60 has a shape extending in the front-rear direction across between the relay shaft 42 and the pivot shaft 13 and extending in the vehicle width direction along the pivot shaft 13. According to such a configuration, most of the load in the front-rear direction input from the secondary chain 49 to the relay shaft 42 can be transmitted as a compressive load to the pivot shaft 13 at the rear while being dispersed in the vehicle width direction via the coupling bracket 60, and deformation of the coupling bracket 60 can be suppressed.

In the present embodiment, since the first boss 61 and the second boss 62 of the coupling bracket 60 are coupled by the coupling portion 63 having a substantial plate shape having a smaller thickness than both bosses, the coupling bracket 60 can be reduced in weight or size.

Moreover, since the plurality of ribs 65 extending in the front-rear direction project on the coupling portion 63, the torsional rigidity of the coupling bracket 60 can be particularly enhanced by the ribs 65. This makes it possible to sufficiently secure the torsional rigidity of the coupling bracket 60 while reducing the weight of the coupling bracket 60 described above.

In the present embodiment, the motor sprocket 41 fixed to the motor output shaft 32 of the electric motor 5 and the relay shaft 42 described above are coupled in an interlocking manner via the primary chain 46. Such a configuration can relatively easily perform adjustment accompanying a change in type of the electric motor 5, and can enhance versatility. That is, when the type of the electric motor 5 is changed, adjustment such as changing the shaft-to-shaft distance between the motor output shaft 32 and the relay shaft 42 or changing the reduction ratio is required. On the other hand, according to the present embodiment in which the power transmission between the motor output shaft 32 and the relay shaft 42 is performed using the primary chain 46, it is possible to relatively easily adjust the shaft-to-shaft distance and the reduction ratio by replacing the primary chain 46. Therefore, for example, versatility can be enhanced as compared with performing power transmission using a gear mechanism.

In the present embodiment, the coupling bracket 60 is configured separately from the electric motor 5. According to such a configuration, since load input from the secondary chain 49 to the relay shaft 42 is received by the coupling bracket 60 separate from the electric motor 5, the load input to the relay shaft 42 becomes less likely to be transmitted to the motor output shaft 32 via the primary chain 46. Due to this, the necessary rigidity of the electric motor 5 is reduced, and therefore the electric motor 5 can be reduced in weight or size. Since a plurality of types of electric motors 5 having different shapes and the like can be shared with the common coupling bracket 60, versatility can be enhanced.

In the present embodiment, the primary chain 46 is disposed on the opposite side of the secondary chain 49 across the electric motor 5. According to such a configuration, for example, as compared with a case where the primary chain 46 and the secondary chain 49 are arranged on one side of the electric motor 5 while being offset in the vehicle width direction, the width center of the electric motor 5 becomes easily brought close to the width center of the vehicle body 1, and a good weight balance can be secured.

In the present embodiment, the electric motor 5 is attached to the vehicle body frame 11 via the pair of support plates 50 detachable with respect to the vehicle body frame 11. According to such a configuration, if the plurality of types of support plates 50 having different shapes are prepared, the plurality of types of electric motors 5 having different shapes can be selectively attached to the common vehicle body frame 11 by appropriately replacing the support plates 50, and the vehicle body frame 11 can be commonalized to the different electric motors 5. Alternatively, the common electric motor 5 can be attached to a plurality of types of vehicle body frames 11 having different shapes, and the electric motor 5 can be commonalized to the different vehicle body frames 11.

The support plate 50 on which the tension of the primary chain 46 and the secondary chain 49 does not directly act has a relatively high degree of freedom in design. Therefore, it is possible to easily reduce the weight or size of the support plate 50.

Since the pair of support plates 50 are joined to the both left and right side portions of the electric motor 5, the electric motor 5 can be supported by being shared by the two support plates 50, and the support rigidity of the electric motor 5 can be enhanced as compared with a case of using one support plate. Since the electric motor 5 is covered from the both left and right sides by the pair of support plates 50, even when the electric two-wheel vehicle tips over, for example, the electric motor 5 can be effectively protected from surrounding obstacles and the like.

In the present embodiment, the coupling bracket 60 has the first boss 61 at a position away forward from the pivot shaft 13, and the flanges 64 detachably joined to the support plate 50 using the bolts B3 are formed at both ends of this first boss 61. According to such a configuration, the coupling bracket 60 can be angularly displaced in side view about the pivot shaft 13 in a state where the joint between the flanges 64 and the support plate 50 is released. This means that if the support plate 50 is replaced with one having another shape, the position relationship between the relay shaft 42 and the pivot shaft 13 can be changed while using the identical coupling bracket 60. Such a change in the position relationship brings about a change in load transmissibility from the relay shaft 42 to the vehicle body frame 11, in other words, a change in vehicle body characteristics. Thus, according to the present embodiment in which the flanges 64 detachable with respect to the support plate 50 are provided at both ends of the first boss 61, there is an advantage of being able to easily adjust the vehicle body characteristics simply by replacing the support plate 50.

In the present embodiment, the bearing 67 is disposed in the flange 64 at each of the both ends of the first boss 61, and the relay shaft 42 is pivotally supported by the first boss 61 via the bearings 67. According to such a configuration, for example, as compared with a case where the bearing 67 exists only on one side, the load input from the secondary chain 49 to the relay shaft 42 can be transmitted to the pivot shaft 13 via the coupling bracket 60 while being well dispersed in the vehicle width direction.

In the present embodiment, as fastening portions for fastening the support plate 50 to the vehicle body frame 11, the first fastening portion f1 and the second fastening portion f2 separated in the front-rear direction, and the third fastening portion f3 separated in the up-down direction from the both fastening portions f1 and f2 are provided. According to such a configuration, the support plate 50 can be used as a truss-like reinforcing member coupling the three points of the vehicle body frame 11, and the vehicle body frame 11 can be efficiently reinforced. Due to this, the necessary rigidity of the vehicle body frame 11 itself becomes low, and therefore the vehicle weight including the vehicle body frame 11 can be reduced.

In the present embodiment, the collars 55 extending in the vehicle width direction across between the left and right support plates 50 are disposed at positions corresponding to the respective fastening portions f1 to f3 described above. According to such a configuration, falling deformation in the vehicle width direction of the support plates 50 can be suppressed by the collars 55, and each of the support plates 50 can be used as a reinforcing member that increases torsional rigidity of the vehicle body frame 11.

In the present embodiment, since the battery tray 80 disposed above the electric motor 5 is supported by the collars 55, the collars 55 for reinforcement can also be used as a support material of the battery tray 80 (in-vehicle component), and the number of components can be reduced.

In the present embodiment, the lower attachment portion 71b of the shock absorber 71 and the lower cross pipe 27 of the vehicle body frame 11 are coupled via the link arm 72, and the link arm 72 and the coupling bracket 60 are coupled via the first coupling plate 73. According to such a configuration, part of the load applied to the lower cross pipe 27 in accordance with expansion and contraction of the shock absorber 71 caused by an unevenness of the road surface can be released to the coupling bracket 60 through the first coupling plate 73. Due to this, the load on the lower cross pipe 27 is reduced, and therefore the vehicle weight including the lower cross pipe 27 can be reduced.

### [Modifications]

In the first embodiment, the electric motor 5 is attached to the vehicle body frame 11 via the pair of left and right support plates 50, but the electric motor 5 only needs to be attached to the vehicle body frame 11 via any support, and it is of course possible to use something other than the support plates 50 as a support. For example, in place of a substantially quadrangular plate-like body as in the first embodiment, a plate-like body having an appropriate shape such as a triangle or a pentagon may be used as a support. Alternatively, a non-plate-like support such as a frame structure or a block structure may be used.

The support does not need to be made of a pair of left and right members arranged on both sides of the electric motor 5, and may be made of one member disposed on one side of the electric motor 5.

Furthermore, the electric motor 5 may be directly attached to the vehicle body frame 11 without via the support plate 50 (support).

In the first embodiment, the electric motor 5 is disposed such that the motor output shaft 32 is positioned at the front of and below the pivot shaft 13, but the electric motor 5 (motor output shaft 32) may be disposed at a position other than this. For example, the motor output shaft 32 may be disposed at the same height as the pivot shaft 13, or may be disposed on an upper side than the pivot shaft 13. The motor output shaft 32 may be disposed at the same front-rear direction position as the pivot shaft 13, or may be disposed at the rear of the pivot shaft 13.

In the first embodiment, the battery 6 is disposed above the electric motor 5, but the battery 6 may be disposed at a position other than this. For example, the battery 6 may be disposed at the front or rear of the electric motor 5.

In the first embodiment, the flanges 64 detachably joined to the support plate 50 are provided at both ends of the first boss 61 of the coupling bracket 60, but various changes can be made as long as the coupling bracket 60 includes an attachment portion detachable with respect to the vehicle body frame 11 at a position away from the pivot shaft 13. For example, the attachment portion may be detachably attached to a support such as the support plate 50, that is, may be detachably attached to the vehicle body frame 11 via the support, or may be detachably attached to any of a plurality of attachment destinations prepared in the vehicle body frame 11.

In the first embodiment, the secondary chain 49 is used as a power transmission member bridged between the relay shaft 42 and the driven sprocket 48, but, the power transmission member only needs to be an endless one that transmits power so that two rotating bodies rotate in an interlocking manner, and may be, for example, a belt.

Similarly, in the first embodiment, the primary chain 46 is used as an upstream side transmission member bridged between the motor output shaft 32 (motor sprocket 41) and the relay shaft 42, but the upstream side transmission member only needs to be an endless one that transmits power so that two rotating bodies rotate in an interlocking manner, and may be, for example, a belt. A gear may be used in place of an endless power transmission member. That is, rotation of the motor output shaft 32 may be transmitted to the relay shaft 42 via the gear.

In the first embodiment, the primary transmission mechanism 33 including the primary chain 46 and the secondary transmission mechanism 34 including the secondary chain 49 are disposed on the opposite side in the vehicle width direction across the electric motor 5, but the primary transmission mechanism 33 may be disposed on the same side as the secondary transmission mechanism 34.

In the first embodiment, the plurality of ribs 65 extending in the front-rear direction are provided on the upper surface of the coupling portion 63 in the coupling bracket 60, but the ribs 65 may be provided not only on the upper surface but also on the lower surface of the coupling portion 63, or may be provided only on the lower surface. At least one rib 65 is sufficient, and one rib 65 may be provided on the upper surface or the lower surface of the coupling portion 63.

In the first embodiment, both ends (flanges 64) of the first boss 61 of the coupling bracket 60 are joined to the support plate 50 and the pivot shaft 13 is inserted into the second boss 62 of the coupling bracket 60, but in place of this, the pivot shaft 13 may be press-fitted into the second boss 62 of the coupling bracket 60. The coupling bracket 60 may be fixed to the vehicle body frame 11 by welding or the like.

In the first embodiment, the pair of left and right swing arms 14 are provided as an arm coupling the rear wheel 3 and the pivot shaft 13, but the swing arm may be a so-called cantilever type swing arm provided only on any one of left and right.

In the first embodiment, the pivot stay 91 having a plate shape is fixed to the curved portion P1 formed in the joint portion between the main pipe 21 and the lower pipe 23, and the pivot shaft 13 is supported by the pivot stay 91, but the support aspect of the pivot shaft 13 is not limited to this. For example, the pivot stay 91 may be fixed to a frame element such as a main pipe extending linearly in the up-down direction. The pivot shaft 13 may be directly supported by the frame element such as the main pipe without via the pivot stay 91. Furthermore, the pivot shaft 13 may be supported by a separate stay bolted to an appropriate position of the vehicle body frame 11.

In a not claimed embodiment, the vehicle body frame 11 can be changed to another appropriate structure as long as it has a structure that can support the electric motor 5 and the pivot shaft 13. For example, the vehicle body frame 11 is not limited to the structure in which the pipe materials are welded to each other as in the first embodiment, and may be a cast molded frame.

In the first embodiment, an example in which the present disclosure is applied to an electric two-wheel vehicle that is a type of saddle-type vehicle has been described, but the present disclosure is also applicable to other electric saddle-type vehicles such as an electric tricycle and an electric four-wheel buggy.

Here, the bracket corresponding to the coupling bracket 60 coupling the relay shaft 42 and the pivot shaft 13 can be applied not only to the electric saddle-type vehicle. For example, the above bracket can also be applied to a conventional saddle-type vehicle using, as a drive source, a power train including an internal combustion engine and a speed reducer. In this conventional saddle-type vehicle, an output shaft of the power train and a rotating body (corresponding to the relay shaft 42 of the first embodiment) that rotates the rear wheel may be coupled in an interlocking manner via an endless transmission member such as a chain. In this case, if the bracket pivotally supporting the rotating body is provided separately from the drive source, the load input from the transmission member to the rotating body is less likely to be transmitted to the drive source, and therefore the weight or size of the drive source can be reduced.

### (2) Second embodiment

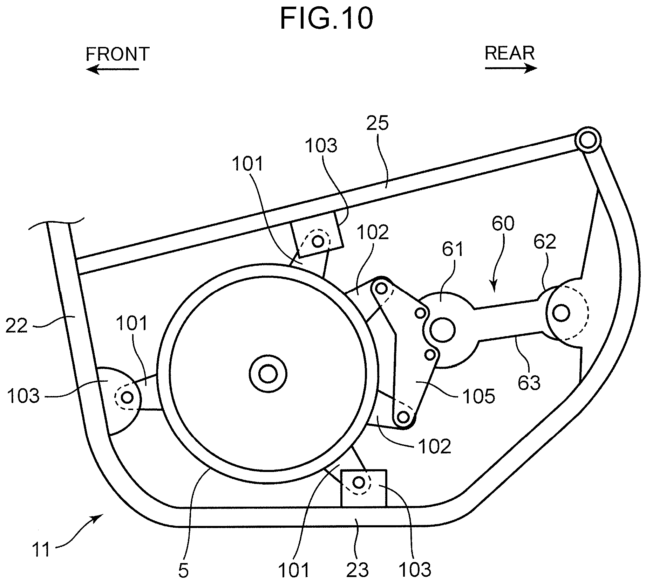

Fig. 10 is a side view showing the electric two-wheel vehicle (saddle-type vehicle) according to the second embodiment of the present disclosure. The second embodiment is different from the first embodiment described above mainly in the support structure of the electric motor 5. Hereinafter, differences from the first embodiment will be mainly described. In Fig. 10, identical constituent elements to those of the first embodiment are denoted by identical reference signs, and description thereof will be omitted.

The electric motor 5 is directly supported by the vehicle body frame 11. Specifically, the electric motor 5 has a plurality of first projection pieces 101 projecting radially outward on an outer peripheral portion thereof. A plurality of stays 103 protruding toward the electric motor 5 are provided at positions corresponding to the respective first projection pieces 101 in the vehicle body frame 11. The electric motor 5 is detachably joined to the vehicle body frame 11 by fastening the first projection pieces 101 respectively to the corresponding stays 103.

Specifically, in the second embodiment, the outer peripheral portion of the electric motor 5 is provided with three first projection pieces 101 so as to be dispersed in the circumferential direction, and three corresponding stays 103 are provided on the vehicle body frame 11. The stay 103 is provided in each of the front pipe 22 positioned at the front of the electric motor 5, the lower pipe 23 positioned below the electric motor 5, and the first coupling pipe 25 positioned above the electric motor 5. The first projection pieces 101 are provided at three locations in the circumferential direction corresponding to the front portion, the upper portion, and the lower portion of the electric motor 5.

Fig. 10 shows the structure on the left side of the vehicle body 1, but the structure on the right side is similar. That is, the above-described three first projection pieces 101 are provided not only on the left side portion of the electric motor 5 but also on the right side portion of the electric motor 5. Similarly, the above-described three stays 103 are provided not only in the pipes 22, 23, and 25 on the left side of the vehicle body frame 11 but also in the pipes 22, 23, and 25 on the right side. The three first projection pieces 101 on the left side are fastened to the three stays 103 on the left side, and the three first projection pieces 101 on the right side are fastened to the three stays 103 on the right side, whereby the electric motor 5 is detachably joined to the vehicle body frame 11.

A pair of left and right coupling plates 105 for coupling the electric motor 5 and the first boss 61 of the coupling bracket 60 are provided between the electric motor 5 and the first boss 61. That is, the left side portion of the electric motor 5 and the left side end surface of the first boss 61 are coupled to each other via the coupling plate 105 of the left side, and the right side portion of the electric motor 5 and the right side end surface of the first boss 61 are coupled to each other via the coupling plate 105 of the right side.

Specifically, in the second embodiment, each of the left side portion and the right side portion of the electric motor 5 is provided with two second projection pieces 102. Each of the second projection pieces 102 is provided at a position at the rear of the first projection piece 101 described above. The coupling plate 105 of the left side couples the second projection piece 102 of the left side and the left side end surface of the first boss 61, and the coupling plate 105 of the right side couples the second projection piece 102 of the right side and the right side end surface of the first boss 61.

Each of the coupling plates 105 is fastened to the second projection piece 102 and the first boss 61, thereby coupling the electric motor 5 and the coupling bracket 60. That is, upper and lower two points in the front portion of the coupling plate 105 are fastened to the second projection piece 102, and upper and lower two points in the rear portion of the coupling plate 105 are fastened to the end surface of the first boss 61, whereby the electric motor 5 and the coupling bracket 60 are coupled to each other.

As described above, in the second embodiment, the outer peripheral portion of the electric motor 5 is provided with the plurality of first projection pieces 101 (joint pieces) detachably joined to the vehicle body frame 11. According to such a configuration, the support rigidity of the electric motor 5 can be enhanced while securing the detachability of the electric motor 5 with respect to the vehicle body frame 11.

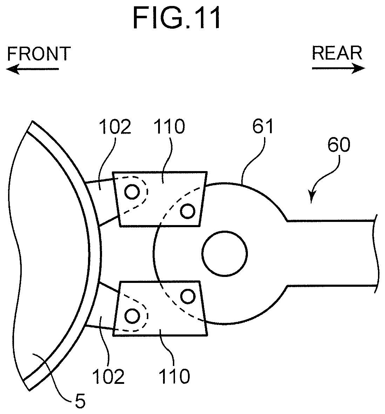

In the second embodiment, the electric motor 5 and the first boss 61 of the coupling bracket 60 are coupled by the pair of left and right coupling plates 105, but the coupling form of the both is not limited to this. For example, as shown in Fig. 11, the electric motor 5 and the first boss 61 may be coupled by a pair of upper and lower coupling plates 110. Each of the coupling plates 110 can be formed of, for example, a plate extending in the vehicle width direction and having a rectangular dish shape as viewed in front-rear direction view. Specifically, in the example of Fig. 11, the coupling plate 110 of the upper side can be a plate having a rectangular dish shape opened downward, and the coupling plate 110 of the lower side can be a plate having a rectangular dish shape opened upward.

### (3) Summary

The above-described embodiments and modifications thereof include the following disclosure.

A saddle-type vehicle according to a first aspect of the present disclosure includes: a swing arm rotatably supporting a rear wheel; a vehicle body frame swingably supporting the swing arm via a pivot shaft; an electric motor; a driving side rotating body disposed at a position away from the electric motor and the pivot shaft and rotationally driven by the electric motor; a driven side rotating body fixed to the rear wheel; an endless power transmission member bridged between the driving side rotating body and the driven side rotating body; and a coupling bracket integrally including a first support portion pivotally supporting the driving side rotating body, a second support portion supported by the pivot shaft, and a coupling portion coupling the first support portion and the second support portion.

According to this first aspect, since the driving side rotating body and the pivot shaft are coupled by the integral coupling bracket, a load applied to the electric motor along with power transmission to the rear wheel can be reduced, and the degree of freedom in design of the electric motor can be improved.

That is, the load input from the power transmission member to the driving side rotating body along with power transmission to the rear wheel is transmitted from the coupling bracket to the vehicle body frame via the pivot shaft. On the other hand, since the electric motor is away from the driving side rotating body and does not directly support the driving side rotating body, load transmission from the driving side rotating body to the electric motor hardly occurs. Therefore, for example, compared to a case where the driving side rotating body is directly supported by the electric motor, that is, a case where the driving side rotating body supported by the electric motor and the rear wheel are coupled by the power transmission member, it is possible to suppress a load from the power transmission member from being transmitted to the electric motor. Due to this, since the necessary rigidity of the electric motor becomes low, the degree of freedom in design of the electric motor can be improved, and the range of options of the electric motor can be increased. For example, it is possible to increase the possibility of adopting not an electric motor exclusively designed for use in a saddle-type vehicle but an existing general-purpose electric motor. Furthermore, since the necessary rigidity of the electric motor is low, it is possible to reduce the weight or size of the electric motor.

In the present aspect, it is also possible to reduce the weight or size of the coupling bracket. That is, the load input from the power transmission member to the driving side rotating body is transmitted from the first support portion to the second support portion via the coupling portion as a compressive load in the shaft-to-shaft direction of the coupling bracket, that is, in the direction coupling the respective shaft centers of the first support portion and the second support portion. The load transmitted to the second support portion is transmitted to the vehicle body frame via the pivot shaft. Thus, in the present embodiment, since the load input to the driving side rotating body is linearly transmitted as a compressive load to the vehicle body frame via the integral coupling bracket, bending load acting on the coupling bracket can be reduced. Due to this, the necessary rigidity (bending rigidity) of the coupling bracket becomes low, and therefore the coupling bracket can be reduced in weight or size, and the vehicle weight that is the weight of the saddle-type vehicle can be reduced.

In a saddle-type vehicle according to a second aspect, in the first aspect, the coupling bracket has a shape extending in a front-rear direction across between the driving side rotating body and the pivot shaft and extending in a vehicle width direction along the pivot shaft.

According to this second aspect, since the driving side rotating body and the pivot shaft are coupled via the coupling bracket extending in the front-rear direction, most of the load in the front-rear direction input from the power transmission member to the driving side rotating body can be transmitted as a compressive load to the pivot shaft at the rear via the coupling bracket. Since the coupling bracket extends in the vehicle width direction along the pivot shaft, the load input to the driving side rotating body can be transmitted to the pivot shaft while being dispersed in the vehicle width direction, and deformation of the coupling bracket can be suppressed.

In a saddle-type vehicle according to a third aspect, in the first or second aspect, the coupling bracket further includes an attachment portion detachably attached to the vehicle body frame at a position away from the electric motor and the pivot shaft.

According to this third aspect, by removing the attachment portion of the coupling bracket from the vehicle body frame, it is possible to angularly displace, in side view, the coupling bracket about the pivot shaft. In this case, if joint destinations of the attachment portion are prepared at a plurality of positions of the vehicle body frame, or a plurality of types of separate supports interposed between the attachment portion and the vehicle body frame are prepared, an angle of the coupling bracket can be changed in accordance with a change in the joint destinations or replacement of the supports. This angle changing enables change in the position relationship between the driving side rotating body and the pivot shaft, and enables adjustment of vehicle body characteristics such as an anti-squat amount, for example.

A saddle-type vehicle according to a fourth aspect, in any one of the first to third aspects, further includes a support supporting the electric motor and detachably attached to the vehicle body frame.

According to this fourth aspect, the vehicle body frame and the electric motor are connected via the support. In other words, the support functions as a relay member that relays connection between the vehicle body frame and the electric motor. This structure leads to an enhancement in the degree of freedom (versatility) of the vehicle body layout and design as compared with a structure in which the vehicle body frame and the electric motor are directly connected.

For example, by replacing the support and changing the coupling bracket, it is possible to change the position relationship between the driving side rotating body and the pivot shaft while commonalizing the vehicle body frame and the electric motor, and it is possible to adjust the vehicle body characteristics. By preparing a plurality of types of supports having different shapes, it is possible to selectively attach a plurality of types of electric motors having different shapes or the like to a common vehicle body frame by appropriately switching the supports, and it is possible to commonalize the vehicle body frame with respect the different electric motor. Alternatively, it is possible to attach a common electric motor to the plurality of types of vehicle body frames having different shapes, and it is possible to commonalize the electric motor with respect to the different vehicle body frame.

Since the load input from the power transmission member is transmitted to the vehicle body frame via the above-described coupling bracket, the load received to the support can be reduced, and the degree of freedom in design of the support can be enhanced to facilitate reduction in weight or size.

In a saddle-type vehicle according to a fifth aspect, in the fourth aspect, the support includes a pair of left and right support plates detachably attached to the vehicle body frame on both sides in a vehicle width direction of the electric motor, and the electric motor is supported between the pair of support plates by detachably joining both left and right side portions of the electric motor to the pair of support plates.

According to this fifth aspect, the electric motor can be supported by the pair of (two) support plates in a shared manner, and the support rigidity of the electric motor can be enhanced as compared with a case of using one support plate. Since the electric motor is covered from both the left and right sides by the pair of support plates, the electric motor can be effectively protected from foreign matters or the like flying from the side of the electric two-wheel vehicle.

A saddle-type vehicle according to a sixth aspect, in the fifth aspect, further includes a collar extending in the vehicle width direction across between the pair of support plates.

According to this sixth aspect, falling deformation in the vehicle width direction of each support plate can be suppressed by the collar, and each support plate can be used as a reinforcing member that enhances the torsional rigidity of the vehicle body frame.

A saddle-type vehicle according to a seventh aspect, in any one of the first to third aspects, further includes a support supporting the electric motor and detachably attached to the vehicle body frame, in which the support includes, as joint portions joined to the vehicle body frame, a first joint portion and a second joint portion separated from each other in a front-rear direction, and a third joint portion separated from both the first and second joint portions in an up-down direction.

According to this seventh aspect, the support can be used as a truss-like reinforcing member coupling the three points of the vehicle body frame, and the vehicle body frame can be efficiently reinforced. Due to this, since the necessary rigidity of the vehicle body frame itself becomes low, the vehicle weight can be reduced.

In a saddle-type vehicle according to an eighth aspect, in any one of the first to third aspects, an outer peripheral portion of the electric motor is provided with a plurality of joint pieces detachably joined to the vehicle body frame.

According to this eighth aspect, it is possible to enhance the support rigidity of the electric motor while securing the detachability of the electric motor with respect to the vehicle body frame.

A saddle-type vehicle according to a ninth aspect, in any one of the first to eighth aspects, further includes a transmission mechanism that transmits rotation of a motor output shaft, which is an output shaft of the electric motor, to the driving side rotating body.

According to this ninth aspect, since the transmission mechanism is interposed between the motor output shaft and the driving side rotating body, the electric motor and the coupling bracket can be easily disposed apart from each other. When the transmission mechanism is adjusted, a plurality of types of electric motors having different shapes or the like can be shared with respect to a common coupling bracket, and therefore versatility can be enhanced.

In a saddle-type vehicle according to a tenth aspect, in the ninth aspect, the transmission mechanism includes an endless upstream side transmission member bridged between the motor output shaft and the driving side rotating body.

According to this tenth aspect, in a case where it becomes necessary to adjust the shaft-to-shaft distance and the reduction ratio as the type of the electric motor is changed, the adjustment can be relatively easily performed by replacing the endless upstream side transmission member or the like. Therefore, for example, versatility can be enhanced as compared with performing power transmission using a gear mechanism.

In a saddle-type vehicle according to an eleventh aspect, in the ninth or tenth aspect, the transmission mechanism is disposed on an opposite side of the power transmission member across the electric motor.

According to this eleventh aspect, as compared with a case where the transmission mechanism and the power transmission member are disposed on the same side, the width center of the electric motor can be easily brought close to the width center of the vehicle body, and the weight balance can be secured well.

A saddle-type vehicle according to a twelfth aspect, in any one of the first to eleventh aspects, further includes: a shock absorber extending downward from an upper portion of a vehicle body; a link arm coupling a lower end portion of the shock absorber and a lower cross pipe of the vehicle body frame; and a coupling member coupling the link arm and the coupling bracket.

According to this twelfth aspect, part of the load applied to the lower cross pipe in accordance with expansion and contraction of the shock absorber caused by an unevenness of the road surface can be released to the coupling bracket through the coupling member. Due to this, since the load on the lower cross pipe is reduced, the vehicle weight including the lower cross pipe can be reduced.

## Claims

1. A saddle-type vehicle comprising:
a swing arm (14) rotatably supporting a rear wheel (3);
a vehicle body frame (11) swingably supporting the swing arm (14) via a pivot shaft (13);
an electric motor (5);
a driving side rotating body (42) disposed at a position away from the electric motor (5) and the pivot shaft (13) and rotationally driven by the electric motor (5);
a driven side rotating body (48) fixed to the rear wheel (3);
an endless power transmission member (49) bridged between the driving side rotating body (42) and the driven side rotating body (48); and
**characterized by** comprising
a coupling bracket (60) integrally including a first support portion (61) pivotally supporting the driving side rotating body (42), a second support portion (62) supported by the pivot shaft (13), and a coupling portion (63) coupling the first support portion (61) and the second support portion (62).

2. The saddle-type vehicle according to claim 1, wherein the coupling bracket (60) has a shape extending in a front-rear direction across between the driving side rotating body (42) and the pivot shaft (13) and extending in a vehicle width direction along the pivot shaft (13).

3. The saddle-type vehicle according to claim 1 or 2, wherein the coupling bracket (60) further includes an attachment portion (64) detachably attached to the vehicle body frame (11) at a position away from the electric motor (5) and the pivot shaft (13).

4. The saddle-type vehicle according to any one of claims 1 to 3, further comprising a support (50) supporting the electric motor (5) and detachably attached to the vehicle body frame (11).

5. The saddle-type vehicle according to claim 4, wherein
the support includes a pair of left and right support plates (50) detachably attached to the vehicle body frame (11) on both sides in a vehicle width direction of the electric motor (5), and
the electric motor (5) is supported between the pair of support plates (50) by detachably joining both left and right side portions of the electric motor (5) to the pair of support plates (50).

6. The saddle-type vehicle according to claim 5, further comprising a collar (55) extending in the vehicle width direction across between the pair of support plates (50).

7. The saddle-type vehicle according to any one of claims 1 to 3, further comprising a support (50) supporting the electric motor (5) and detachably attached to the vehicle body frame (11),
wherein the support (50) includes, as joint portions joined to the vehicle body frame (11), a first joint portion (f1) and a second joint portion (f2) separated from each other in a front-rear direction, and a third joint portion (f3) separated from both the first and second joint portions (f1 and f2) in an up-down direction.

8. The saddle-type vehicle according to any one of claims 1 to 3, wherein an outer peripheral portion of the electric motor (5) is provided with a plurality of joint pieces (101) detachably joined to the vehicle body frame (11).

9. The saddle-type vehicle according to any one of claims 1 to 8, further comprising a transmission mechanism (33) that transmits rotation of a motor output shaft (32), which is an output shaft of the electric motor (5), to the driving side rotating body (42).

10. The saddle-type vehicle according to claim 9, wherein the transmission mechanism (33) includes an endless upstream side transmission member (46) bridged between the motor output shaft (32) and the driving side rotating body (42).

11. The saddle-type vehicle according to claim 9 or 10, wherein the transmission mechanism (33) is disposed on an opposite side of the power transmission member (49) across the electric motor (5).

12. The saddle-type vehicle according to any one of claims 1 to 11, further comprising:
a shock absorber (71) extending downward from an upper portion of a vehicle body (1);
a link arm (72) coupling a lower end portion of the shock absorber (71) and a lower cross pipe (27) of the vehicle body frame (11); and
a coupling member (73) coupling the link arm (72) and the coupling bracket (60).

## Patentansprüche

1. Ein Sattelfahrzeug, umfassend:
eine Schwinge bzw. einen Schwingarm (14), der ein Hinterrad (3) drehbar lagert;
einen Fahrzeugrahmen (11), der den Schwingarm (14) über eine Schwingarmlagerachse (13) schwenkbar lagert,
einen Elektromotor (5);
einen antriebsseitigen Rotationskörper (42), der an einer vom Elektromotor (5) und der Schwingarmlagerachse (13) beabstandeten Stelle angeordnet ist und vom Elektromotor (5) drehend angetrieben wird;
einen abtriebsseitigen Rotationskörper (48), der an dem Hinterrad (3) fest angebracht ist;
ein endloses Kraftübertragungselement (49), das zwischen dem antriebsseitigen Rotationskörper (42) und dem abtriebsseitigen Rotationskörper (48) gespannt ist; und
**dadurch gekennzeichnet, dass** es Folgendes umfasst:
einen Koppelträger (60), der einstückig einen ersten Stützabschnitt (61), der den antriebsseitigen Rotationskörper (42) schwenkbar lagert, einen zweiten Stützabschnitt (62), der von der Schwingarmlagerachse (13) getragen wird, und einen Koppelabschnitt (63) beinhaltet, der den ersten Stützabschnitt (61) und den zweiten Stützabschnitt (62) miteinander verbindet.

2. Das Sattelfahrzeug nach Anspruch 1, wobei der Koppelträger (60) eine Form aufweist, die sich in einer Vorder-Hinter-Richtung zwischen dem antriebsseitigen Rotationskörper (42) und der Schwingarmlagerachse (13) erstreckt und sich in einer Fahrzeugbreitenrichtung entlang der Schwingarmlagerachse (13) erstreckt.

3. Das Sattelfahrzeug nach Anspruch 1 oder 2, wobei der Koppelträger (60) ferner einen Befestigungsabschnitt (64) beinhaltet, der an einer vom Elektromotor (5) und der Schwingarmlagerachse (13) beabstandeten Stelle lösbar am Fahrzeugrahmen (11) befestigt ist.

4. Das Sattelfahrzeug nach irgendeinem der Ansprüche von 1 bis 3, ferner umfassend eine Halterung (50), welche den Elektromotor (5) trägt und lösbar am Fahrzeugrahmen (11) befestigt ist.

5. Das Sattelfahrzeug nach Anspruch 4, wobei
die Halterung ein Paar linker und rechter Trägerplatten (50) beinhaltet, die auf beiden Seiten in Fahrzeugbreitenrichtung des Elektromotors (5) lösbar am Fahrzeugrahmen (11) befestigt sind, und wobei
der Elektromotor (5) zwischen dem Paar von Trägerplatten (50) getragen wird, indem sowohl der linke als auch der rechte Seitenabschnitt des Elektromotors (5) lösbar mit dem Paar Trägerplatten (50) verbunden sind.

6. Das Sattelfahrzeug nach Anspruch 5, ferner umfassend eine Hülse (55), die sich in Fahrzeugbreitenrichtung zwischen dem Paar von Trägerplatten (50) erstreckt.

7. Das Sattelfahrzeug nach irgendeinem der Ansprüche von 1 bis 3, ferner umfassend eine Halterung (50), welche den Elektromotor (5) trägt und lösbar am Fahrzeugrahmen (11) befestigt ist,
wobei die Halterung (50) als mit dem Fahrzeugrahmen (11) verbundene Verbindungsabschnitte Folgendes beinhaltet: einen ersten Abschnitt (f1) und einen zweiten Abschnitt (f2), die in einer Vorder-Hinter-Richtung voneinander beabstandet sind, sowie einen dritten Abschnitt (f3) beinhaltet, der sowohl vom ersten als auch vom zweiten Abschnitt (f1 und f2) in Oben-unten-Richtung getrennt ist.

8. Das Sattelfahrzeug nach irgendeinem der Ansprüche von 1 bis 3, wobei ein äußerer Umfangsabschnitt des Elektromotors (5) mit einer Vielzahl von Verbindungsstücken (101) versehen ist, die lösbar mit dem Fahrzeugrahmen (11) zusammengefügt sind.

9. Das Sattelfahrzeug nach irgendeinem der Ansprüche von 1 bis 8, ferner umfassend einen Übertragungsmechanismus (33), der die Drehung einer Motorabtriebswelle (32), bei der es sich um eine Ausgangswelle des Elektromotors (5) handelt, auf den antriebsseitigen Rotationskörper (42) überträgt.

10. Das Sattelfahrzeug nach Anspruch 9, wobei der Übertragungsmechanismus (33) ein endloses, vorgelagertes Übertragungselement (46) beinhaltet, das zwischen der Motorabtriebswelle (32) und dem antriebsseitigen Rotationskörper (42) gespannt ist.

11. Das Sattelfahrzeug nach Anspruch 9 oder 10, wobei der Übertragungsmechanismus (33) auf der dem Kraftübertragungselement (49) gegenüberliegenden Seite des Elektromotors (5) angeordnet ist.

12. Das Sattelfahrzeug nach irgendeinem der Ansprüche von 1 bis 11, ferner umfassend:
einen Stoßdämpfer (71), der sich von einem oberen Abschnitt eines Fahrzeugkörpers (1) nach unten erstreckt;
einen Lenkerarm (72), der einen unteren Abschnitt des Stoßdämpfers (71) mit einem unteren Querrohr (27) des Fahrzeugrahmens (11) miteinander verbindet; und
ein Koppelelement (73), das den Lenkerarm (72) und den Koppelträger (60) miteinander verbindet.

## Revendications

1. Un véhicule de type à selle comprenant :
un bras oscillant (14) supportant de manière rotative une roue arrière (3) ;
un cadre de véhicule (11) supportant de manière pivotante le bras oscillant (14) par l'intermédiaire d'un arbre de pivot (13) ;
un moteur électrique (5) ;
un corps rotatif côté entraînement (42) disposé à une position à l'écart du moteur électrique (5) et de l'arbre de pivot (13) et entraîné en rotation par le moteur électrique (5) ;
un corps rotatif côté entraîné (48) fixé à la roue arrière (3) ;
un organe de transmission de puissance sans fin (49) tendu entre le corps rotatif côté entraînement (42) et le corps rotatif côté entraîné (48) ; et
**caractérisé en ce qu'**il comprend
un support de liaison (60) incluant d'un seul tenant une première portion de support (61) supportant de manière pivotante le corps rotatif côté entraînement (42), une deuxième portion de support (62) supportée par l'arbre de pivot (13), et une portion de liaison (63) reliant la première portion de support (61) et la deuxième portion de support (62).

2. Le véhicule de type à selle d'après la revendication 1, sachant que le support de liaison (60) présente une forme s'étendant dans une direction avant-arrière entre le corps rotatif côté entraînement (42) et l'arbre de pivot (13), et s'étendant dans une direction de la largeur du véhicule le long de l'arbre de pivot (13).

3. Le véhicule de type à selle d'après la revendication 1 ou 2, sachant que le support de liaison (60) inclut en outre une portion de fixation (64) fixée de manière amovible au cadre de véhicule (11) à une position à l'écart du moteur électrique (5) et de l'arbre de pivot (13).

4. Le véhicule de type à selle d'après l'une quelconque des revendications de 1 à 3, comprenant en outre un support (50) supportant le moteur électrique (5), et fixé de manière amovible au cadre de véhicule (11).

5. Le véhicule de type à selle d'après la revendication 4, sachant que
le support inclut une paire de plaques de support gauche et droite (50) fixées de manière amovible au cadre de véhicule (11) de part et d'autre du moteur électrique (5) dans la direction de la largeur du véhicule, et
le moteur électrique (5) est supporté entre la paire de plaques de support (50) par liaison amovible des portions latérales gauche et droite du moteur électrique (5) avec la paire de plaques de support (50).

6. Le véhicule de type à selle d'après la revendication 5, comprenant en outre une entretoise (55) s'étendant dans la direction de la largeur du véhicule entre la paire de plaques de support (50).

7. Le véhicule de type à selle d'après l'une quelconque des revendications de 1 à 3, comprenant en outre un support (50) supportant le moteur électrique (5), et fixé de manière amovible au cadre de véhicule (11),
sachant que le support (50) inclut, en tant que portions de jonction reliées au cadre de véhicule (11), une première portion de jonction (f1) et une deuxième portion de jonction (f2) séparées l'une de l'autre dans une direction avant-arrière, ainsi qu'une troisième portion de jonction (f3) séparée à la fois de la première et de la deuxième portions de jonction (f1 et f2) dans une direction haut-bas.

8. Le véhicule de type à selle d'après l'une quelconque des revendications de 1 à 3, sachant que la portion périphérique extérieure du moteur électrique (5) est pourvue d'une pluralité de pattes de jonction (101) reliées de manière amovible au cadre de véhicule (11).

9. Le véhicule de type à selle d'après l'une quelconque des revendications de 1 à 8, comprenant en outre un mécanisme de transmission (33) qui transmet la rotation d'un arbre de sortie de moteur (32), qui constitue un arbre de sortie du moteur électrique (5), au corps rotatif côté entraînement (42).

10. Le véhicule de type à selle d'après la revendication 9, sachant que le mécanisme de transmission (33) inclut un organe de transmission amont sans fin (46) tendu entre l'arbre de sortie de moteur (32) et le corps rotatif côté entraînement (42).

11. Le véhicule de type à selle d'après la revendication 9 ou 10, sachant que le mécanisme de transmission (33) est disposé d'un côté opposé à l'organe de transmission de puissance (49) par rapport au moteur électrique (5).

12. Le véhicule de type à selle d'après l'une quelconque des revendications de 1 à 11, comprenant en outre :
un amortisseur (71) s'étendant vers le bas à partir d'une portion supérieure d'un corps de véhicule (1) ;
un bras de liaison (72) reliant une portion d'extrémité inférieure de l'amortisseur (71) et un tube transversal inférieur (27) du cadre de véhicule (11) ; et
un élément de liaison (73) reliant le bras de liaison (72) au support de liaison (60).
